(19) Europäisches Patentamt
European Patent Office
Office européen des brevets

(11) **EP 2 169 222 A2**

(12) **EUROPÄISCHE PATENTANMELDUNG**

(43) Veröffentlichungstag:
**31.03.2010 Patentblatt 2010/13**

(51) Int Cl.:
***F03D 9/00*** *(2006.01)*

(21) Anmeldenummer: **09012349.8**

(22) Anmeldetag: **29.09.2009**

(84) Benannte Vertragsstaaten:
**AT BE BG CH CY CZ DE DK EE ES FI FR GB GR HR HU IE IS IT LI LT LU LV MC MK MT NL NO PL PT RO SE SI SK SM TR**
Benannte Erstreckungsstaaten:
**AL BA RS**

(30) Priorität: **30.09.2008 DE 102008049630**

(71) Anmelder: **REpower Systems AG**
**22297 Hamburg (DE)**

(72) Erfinder: **Letas, Heinz-Hermann, Dr.**
**Gross Meinsdorf**
**23701 Süsel (DE)**

(74) Vertreter: **Glawe, Delfs, Moll**
**Patent- und Rechtsanwälte**
**Rothenbaumchaussee 58**
**20148 Hamburg (DE)**

(54) **Überspannungsschutzgerät für Windenergieanlagen**

(57) Überspannungsschutzgerät für Windenergieanlagen (1), das zum Anschluss an eine Anschlussleitung (2) mit mindestens einer Induktivität (22) zwischen Windenergieanlage (1) und Netz (9) ausgebildet ist, einem Steuergerät (4), welches in Abhängigkeit von einer Überspannung an der Windenergieanlage (1) eine Begrenzungseinheit betätigt, wobei die Begrenzungseinheit eine Stichleitung (32) mit einem mit einer Schalteinheit versehenen Leistungsverzweigungsmodul (30) und einem Drosselmodul (31) umfasst. Damit wird ein zweiter Leistungsstrang bereitgestellt, der bei Bedarf einen beträchtlichen Blindstrom aufnehmen kann, wodurch sich der Spannungsabfall über die Induktivität (22) vergrößert, so dass die auf die Windenergieanlage (1) wirkende Spannung abgesenkt wird.

**Fig. 1**

EP 2 169 222 A2

**Beschreibung**

Die Erfindung betrifft ein Überspannungsschutzgerät für Windenergieanlagen, die über einen elektrischen Anschluss mit mindestens einer Induktivität an ein Netz angeschlossen ist, wobei ein Steuergerät vorgesehen ist, welches in Abhängigkeit von einer Überspannung an der Windenergieanlage eine Begrenzungseinheit betätigt.

Die zunehmende Verbreitung von Windenergieanlagen stellt erhöhte Anforderungen an ihr Verhalten am Netz. Dies gilt auch für das Verhalten der Windenergieanlagen bei Netzspannungsstörungen, insbesondere Spannungsspitzen. So haben sich bisher Windenergieanlagen häufig beim Auftreten von Spannungsspitzen aus Gründen des Eigenschutzes abgeschaltet, jedoch wird ein solches Verhalten im Hinblick auf die Netzverträglichkeit häufig nicht mehr akzeptiert. Es wird verlangt, dass Windenergieanlagen zumindest kurzzeitige Spannungsspitzen von bis zu 120 % der Netzspannung vertragen. Auf derartige Anforderungen sind moderne Windenergieanlagen ausgelegt.

Die Anforderungen der Netzbetreiber sind aber nicht in allen Ländern gleich. So gibt es Netzbetreiber, die zusätzliche Anforderungen stellen, insbesondere eine Toleranz gegenüber Spannungsspitzen von bis zu 140 % der Nennspannung. Bei den Komponenten einer üblichen modernen Windenergieanlage, die auf Spannungsspitzen bis zu 120 % ausgelegt ist, kann dies nicht erfüllt werden ohne die Komponenten der Windenergieanlage an die erhöhte Spitzenspannung anzupassen. Dieses bedeutet aber zusätzliche Kosten. Es ist daher vorgeschlagen worden, eine Blindleistungsquelle parallel zur Windenergieanlage an die Übertragungsleitung anzuschließen. Diese Blindleistungsquelle, die auch unter der Bezeichnung Statcom bekannt ist, speist im Bedarfsfall zusätzliche Blindleistung ein, wodurch es ebenfalls zu einer Änderung der Spannung an der Windenergieanlage kommt. Zwar braucht die Statcom nur dann betätigt zu werden, wenn Überspannung auftritt, so dass sie keine negativen Auswirkungen auf den Normalbetrieb hat. Dem steht jedoch der Nachteil gegenüber, dass die Anschaffungs- und Installationskosten einer solchen Blindleistungsquelle erheblich sind. Weiter ist es bekannt, in Windparks unmittelbar an Windenergieanlagen Blindleistungsquellen mit geschalteten Kondensatoren vorzusehen (US 7,095,597 B1). Die Kondensatoren werden so betätigt, dass die Spannung an der Windenergieanlage geregelt wird. Anders als bei der Statcom sind die Kondensatoren also während des normalen Betriebs immer aktiviert, müssen daher entsprechend groß und robust dimensioniert sein. Dies bedingt einen beträchtlichen Kostenaufwand.

Ein ganz anderer Ansatz zur Minimierung zusätzlichen Aufwands liegt darin, den Stator beim Auftreten einer Überspannung schnell vom Netz zu trennen, und die darin gespeicherte Energie über eine Ersatzlast kontrolliert abzubauen (WO 2004/070936 A1). Dies bietet den Vorteil, dass die Magnetisierung im Stator noch über eine gewisse Zeit erhalten werden kann, sodass ein Wiederzuschalten nach nur kurz andauernder Netzstörung leicht und schnell wieder erfolgen kann. Dieser Ansatz bietet zwar den Vorteil eines nur geringen Zusatzaufwands, hat jedoch den Nachteil der im Störungsfall stets erforderlichen Abtrennung des Stators vom Netz.

Der Erfindung liegt die Aufgabe zugrunde, ein verbessertes Überspannungsschutzgerät zu schaffen, welches die oben genannten Nachteile vermeidet.

Die erfindungsgemäße Lösung liegt in den Merkmalen des unabhängigen Anspruchs. Vorteilhafte Weiterbildungen sind Gegenstand der abhängigen Ansprüche.

Bei einem Überspannungsschutzgerät für Windenergieanlagen, das zum Anschluss an eine Übertragungsleitung mit mindestens einer Induktivität zwischen Windenergieanlage und Netz ausgebildet ist, und ein Steuergerät aufweist, welches in Abhängigkeit von einer Überspannung einer Windenergieanlage eine Begrenzungseinheit betätigt, ist erfindungsgemäß vorgesehen, dass die Begrenzungseinheit eine Stichleitung mit einem mit einem Schalter versehenen Leistungsverzweigungsmodul und ein Drosselmodul umfasst.

Unter Drosselmodul wird hier ein Modul verstanden, welches die Phasen oder eine Phase und einen Neutralleiter über eine induktive Drossel kurzschließt. Es ist die Eigenschaft der induktiven Drossel, dass sie einen verhältnismäßig hohen Kurzschlussstrom hat, der mit seiner Phase der jeweiligen Spannung nacheilt und damit induktive Blindleistung erzeugt, und zwar vorzugsweise mit einfachen und kostengünstigen passiven Komponenten in dem Drosselmodul.

Der Kern der Erfindung liegt in einer Kombination aus der Leistungsverzweigung und Bereitstellung eines Drosselmoduls in der abgezweigten Stichleitung. Indem ein vorzugsweise schnell schaltender Schalter in dem Leistungsverzweigungsmodul angeordnet ist, kann ein zweiter - paralleler - Leistungsstrang im Fall von Überspannung schnell bereitgestellt werden. Indem dieser temporäre parallele Leistungsstrang an ein Drosselmodul angeschlossen ist, wird erreicht, dass in diesem ein beträchtlicher Blindstrom fließt. Dieser führt dazu, dass an der Induktivität der Übertragungsleitung ein Spannungsabfall auftritt, wodurch bei einer Überspannung im Netz die an der Windenergieanlage wirksame Spannung abgesenkt wird. Das Drosselmodul wird hierbei im Normalbetrieb nicht bestromt, so dass keine Verluste im Normalbetrieb auftreten. Da das Drosselmodul also nur kurzzeitig bestromt wird, ist es thermisch im Normalbetrieb überhaupt nicht belastet, und kann daher im Fall einer Überspannungsspitze sehr hoch belastet werden, ohne dass es zu einer thermischen Überlastung kommt.

Die Erfindung macht sich hier zunutze, dass von der Windenergieanlage nur eine kurzzeitige Toleranz gegenüber den Überspannungsspitzen verlangt wird. Unter Überspannungsspitzen werden hier diese verstanden, die über den üblichen Bereich von 120% hinausgehen. So sind die Anforderungen für die Toleranz in Bezug auf die volle Überspannungsspitzen in Höhe von 140% der Nennspannung einzig auf einen Zeitbereich von nur wenigen Zehntelsekunden beschränkt, wobei die gesamte Überspannungsspitze sich nur über einen Zeitraum von weniger als einer Minute überhaupt in dem Bereich oberhalb von 120% der Nennspannung (welcher bei üblichen Windenergieanlagen ja ohnehin durch die Dimensionierung der Komponenten für den Regelbetrieb abgedeckt ist) aufhält. Es ist der Verdienst der Erfindung erkannt zu haben, dass wegen dieser zeitlichen Kürze auch Komponenten, hier Drosselmodule, verwendet werden können, die bei Beaufschlagung mit der Überspannungsspitze an sich erheblich überlastet werden. Wegen der kurzen zeitlichen Beaufschlagung wird ein Defekt der Komponenten dennoch vermieden. Die Kostenvorteile aus der geringen Dimensionierung können damit voll realisiert werden, ohne dass es zu Nachteilen in Bezug auf die Betriebssicherheit kommt.

Die erfindungsgemäße Ausführung mit einem Leistungsverzweigungsmodul und einem Drosselmodul, welches kostengünstig ist, bietet weiter den Vorteil, dass es leicht durch Austausch an unterschiedliche Netzanschlussbedingungen angepasst werden kann. Nach der Höhe der Überspannungsspitze und dem Zeitraum, über den sie aufzunehmen ist, kann das Drosselmodul ausgewählt werden. Somit kann die Windenergieanlage durch einfaches Tauschen des Drosselmoduls zum Betrieb in Netzen mit ganz unterschiedlichen Netzanschlussbedingungen in Bezug auf die Überspannungsspitzen angepasst werden.

Dies ermöglicht es, das erfindungsgemäße Drosselmodul ausgesprochen klein zu dimensionieren, was entsprechende Kostenvorteile mit sich bringt. Die Erfindung vereinigt damit die Vorteile hinsichtlich günstigem Verhalten im Betrieb mit geringen Anschaffungs- und Installationskosten. Ein weiterer Vorteil der Erfindung liegt darin, dass sie die ohnehin vorhandene Induktivität in der Übertragungsleitung zum Spannungsabbau nutzt. Sie ist damit effizient und kostengünstig umzusetzen.

Bei einer bevorzugten Ausführungsform der Erfindung ist das Drosselmodul als ein Transformator ausgeführt, genauer gesagt als ein Drosseltransformator. Dieser zeichnet sich dadurch aus, dass die Streuinduktivität des Transformators im Wesentlichen auf in der Luft liegenden magnetischen Streufeldern beruht. Diese sind keiner Sättigung ausgesetzt. Daher eignet sich ein solcher Transformator besonders für den Kurzschlussbetrieb, da er keine erhöhte Auslegung des Magnetkreises wie bei auf Magnetkernen basierenden Drosseln benötigt. Dies erlaubt es, derartige Transformatoren zumindest im Kurzzeitbetrieb thermisch und magnetisch sehr hoch zu überlasten. Dadurch können kleine, kostengünstige Transformatoren für das erfindungsgemäße Überspannungsschutzgerät vorgesehen werden. Hierbei kommt ein weiterer Vorteil der erfindungsgemäßen Anordnung zum Tragen, nämlich dass durch die Anordnung in der Stichleitung eventuell auftretende Leerlaufverluste bei der magnetischen Auslegung nicht berücksichtigt zu werden brauchen, da dank der Stichleitung im Normalbetrieb kein Strom durch den Transformator fließt.

Der Schalter ist vorzugsweise als ein schneller Schalter ausgeführt. Darunter wird hierbei verstanden, dass er innerhalb von wenigen, d. h. maximal 10 Millisekunden durchschaltet. Der Schalter kann hierbei als Zwischenschalter ausgelegt sein. Dies bedeutet, dass er zwischen dem Anschlusspunkt des Leistungsverzweigungsmoduls an die Übertragungsleitung und dem Drosselmodul angeordnet ist. Im Regelfall wird diese Anordnung so getroffen sein. Allerdings ist sie nicht zwingend, sondern es kann je nach Ausführung des Drosselmoduls auch vorgesehen sein, dass der Schalter als Kurzschlussschalter an dem Modul ausgeführt ist.

Vorzugsweise ist der Schalter als ein Thyristorschalter ausgeführt. Diese bieten den Vorteil einer sehr hohen Schaltgeschwindigkeit, die 1 ms oder weniger betragen kann. Bezogen auf die Netzfrequenz bedeutet dies, dass der Thyristorschalter ohne praktisch spürbaren Verzug durchschaltet. Zweckmäßigerweise ist der Thyristorschalter mit einem Parallelschütz kombiniert. Dieses ist dazu ausgebildet, bei länger dauernder Betätigung den Strom von dem Thyristorschalter zu übernehmen. Unter länger dauernd wird hierbei eine Betätigung von mindestens 100 ms verstanden. Das Parallelschütz kann auch in Halbleitertechnik ausgeführt sein, beispielsweise mit einem IGBT, oder auch selbststeuernd mit einem Varistor oder einer Zenerdiode.

In vielen Fällen sind zwei antiparallel angeordnete Thyristorschalter je Phase vorgesehen. Zweckmäßig ist die Anordnung von antiparallelen Schaltern in einer hier so bezeichneten Sparschaltung. Hierunter wird verstanden, dass die Schalter nur in zwei von drei Phasen bei einem Drehstromsystem vorgesehen sind. Damit kann mit einer geringeren Anzahl von Schaltern der Stromfluss in allen drei Phasen geschaltet werden. Gemäß einer weitergebildeten Ausführungsform sind Schalter in einer hier so bezeichneten Super-Sparschaltung angeordnet. Dies bedeutet, dass nicht zwei antiparallele Schalter zusammengeschaltet sind, sondern dass die einzelnen Phasen mit nur einseitigen Thyristorschaltern miteinander verbunden sind. Damit ist die Anzahl der erforderlichen Schalter minimiert, und es wird dennoch eine sichere Abschaltung des Stroms erreicht.

Eine weitere Ausführungsmöglichkeit für die Schalter, insbesondere eine Konfiguration als Kurzschlussschalter, besteht in deren Anordnung als Brückenschaltung. So können sechs Schalter als vollgesteuerte Brücke angeordnet sein, bspw. sechs Thyristorschalter für einen Kurzzeitbetrieb als vollgesteuerte Thyristorbrücke. Zur Vereinfachung kann auch eine halbgesteuerte Brücke vorgesehen sein, bei der statt sechs drei Schalter und zusätzlich drei Dioden für einen passiven Gleichrichter verwendet werden.

Das Drosselmodul ist vorzugsweise derart dimensioniert, dass es eine Kurzschlussspannung von etwa 3 bis 7 %, vorzugsweise 4 bis 6 % aufweist. Dank der erfindungsgemäßen, nur sehr kurzzeitigen Belastung in der Stichleitung der Leistungsverzweigung kann das im Übrigen völlig unbelastete Drosselmodul im Bedarfsfall erheblich überlastet werden. Mit der genannten Auslegung kann es bei Nennspannung mit der fünfundzwanzigfachen Leistung im Kurzzeitbetrieb beaufschlagt werden. Angestrebt wird eine Kurzschlussspannung im Bereich zwischen 4% und 6%, damit die Verwendung handelsüblicher Transformatoren ermöglicht wird. Auf jeden Fall ist das Drosselmodul so dimensioniert, dass es in Abhängigkeit der lokal geforderten maximalen Spannungsspitze, der Zeitdauer der maximalen Spannungsspitze und/oder der lokal vorliegenden Netzimpedanz die maximale Spannungsspitze an der Windenergieanlage auf Spannungen von höchstens 120% der Nennspannung reduziert ohne thermisch überlastet zu werden.

In vielen Fällen genügt es, wenn nur ein allphasig wirkendes Drosselmodul vorgesehen ist. Für andere Fälle kann es von Vorteil sein, wenn ein mehrstufig ausgeführtes Drosselmodul vorgesehen ist. Durch entsprechende Schalterbetätigung wird dann eine erste, eine zweite und ggf. eine dritte oder weitere Stufe geschaltet, wodurch sich die Gesamtwirkung des Drosselmoduls verändert. Damit können zusätzliche Reserven geschaffen werden, um auch Spannungsspitzen über den erwarteten Bereich hinaus abzubauen. Eine bevorzugte Ausführung für die Mehrstufigkeit ist eine Parallelanordnung. Hier sind mehrere in ihrer Leistung bzw. Kurzschlussspannung gestaffelt ausgeführte Komponenten des Drosselmoduls jeweils über eigene Schaltelemente parallel angeordnet. Durch Betätigen einer oder mehrerer der Schalter können mehrere Stufen realisiert werden. Bei gestaffelter Dimensionierung können eine Vielzahl von Stufen erreicht werden (bspw. bei einer Dimensionierung von 4:2:1 können sieben Stufen mit lediglich drei Komponenten erreicht werden). Zu ihrer Ansteuerung weist das Steuergerät vorzugsweise eine Mehrstufenlogik auf, welche in Abhängigkeit von der Überspannung die Anzahl der zu betätigenden Stufen bestimmt.

Das Steuergerät weist mit Vorteil ein Repetitionsmodul auf. Es ist dazu ausgebildet, eine bestimmte Anzahl von Betätigungen der Leistungsverzweigung in schneller Folge innerhalb einer bestimmten Zeit zu überwachen. Wird diese bestimmte Anzahl innerhalb der festgelegten Zeit überschritten, so folgt aus Gründen der Schonung des Überspannungsgeräts keine weitere Betätigung. Nach einer Wartezeit, die als Abkühlphase gesehen werden kann, steht das Überspannungsschutzgerät dann wieder zur Verfügung. Vorzugsweise wirkt dies mit einem Überlastmodul des Steuergeräts zusammen. Dieses ist dazu ausgebildet, einer übergeordneten Regelungseinheit, wobei es sich in der Regel um einen Parkmaster eines Windparks handelt, in dem die dem Überspannungsschutzgerät zugeordnete Windenergieanlage steht, ein Kontrollsignal zu übermitteln, wenn die Kapazität des Überspannungsschutzgeräts erschöpft ist. Dies kann der Fall sein, wenn die Überspannung höher wird als von dem Überspannungsschutzgerät mit seinem Drosselmodul beherrschbar, oder wenn wegen einer hohen Anzahl von Spannungsspitzen in kurzer Zeit das Repetitionsmodul zum Komponentenschutz ausgelöst hat. Mittels des Überlastmoduls kann dann dafür gesorgt werden, dass bei weiterer auftretender Überspannung die betreffende Windenergieanlage zum Schutz vom Netz getrennt wird. Darüber hinaus ist in dem Überlastungsmodul eine Spannungs-/Zeitcharakteristik hinterlegt, die die maximalen Einschaltzeiten in Abhängigkeit der Spannung oder des Spannungsverlaufs am Messpunkt bestimmen. Es können auch Temperatursensoren an dem Drosselmodul vorgesehen sein und das Überlastungsmodul überwacht die thermische Belastung des Drosselmoduls, so dass eine kritische Überlastung, die zur Beschädigung des Drosselmoduls führen könnte, vermieden wird.

Das Drosselmodul ist allphasig an die Übertragungsleitung angeschlossen. Im Regelfall benötigt es keinen Anschluss an einen Nullleiter. Dies soll aber nicht ausgeschlossen sein, sondern es kann auch ein Anschluss an den Nullleiter vorgesehen sein. Dies bietet insbesondere dann Vorteile, wenn auch unsymmetrische Spannungsfehler auszugleichen sind.

Die Erfindung wird nachfolgend unter Bezugnahme auf die beigefügte Zeichnung näher erläutert, in der vorteilhafte Ausführungsbeispiele der Erfindung dargestellt sind. Es zeigen:

Fig. 1 eine schematische Ansicht eines Ausführungsbeispiels für ein Überspannungsgerät an einer Übertragungsleitung zwischen einer Windenergieanlage und einem Netz;

Fig. 2 verschiedene Ausführungsbeispiele für ein Leistungsverzweigungsmodul und ein Drosselmodul;

Fig. 3 verschiedene Ausführungsbeispiele mit einer Drossel;

Fig. 4 weitere Ausführungsbeispiele mit einem Transformator;

Fig. 5 ein Ausführungsbeispiel für Schalter des Leistungsverzweigungsmoduls;

Fig. 6 alternative Ausführungsformen für schnelle Schalter des Leistungsverzweigungsmoduls;

Fig. 7 ein elektrisches Ersatzschaltbild der Anordnung gemäß Fig. 1; und

Fig. 8 ein Diagramm zur Netzanschlussbedingung hinsichtlich Überspannungsspitzen.

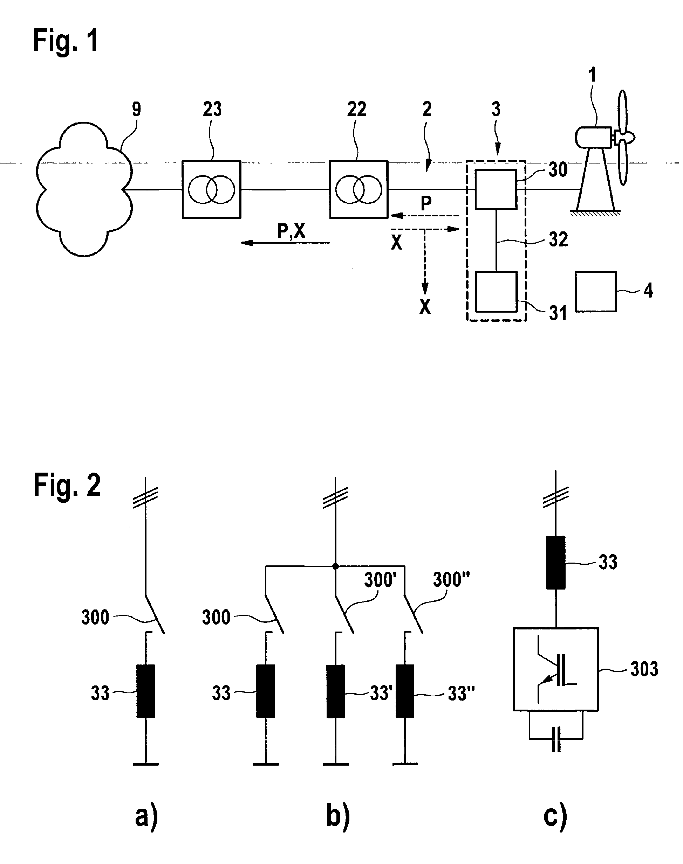

Eine an ein Netz 9 angeschlossene Niederspannungs-Windenergieanlage 1 ist in Fig. 1 dargestellt.

Sie ist angeschlossen über eine Anschlussleitung 2 mit einem Mittelspannungstransformator 22 und einem Hochspannungstransformator 23 an das Netz 9 angeschlossen. Es sei angemerkt, dass es sich bei den Transformatoren als Anlagentransformator 22 und Parktransformator 23 um lediglich beispielhafte Darstellungen für Induktivitäten handelt.

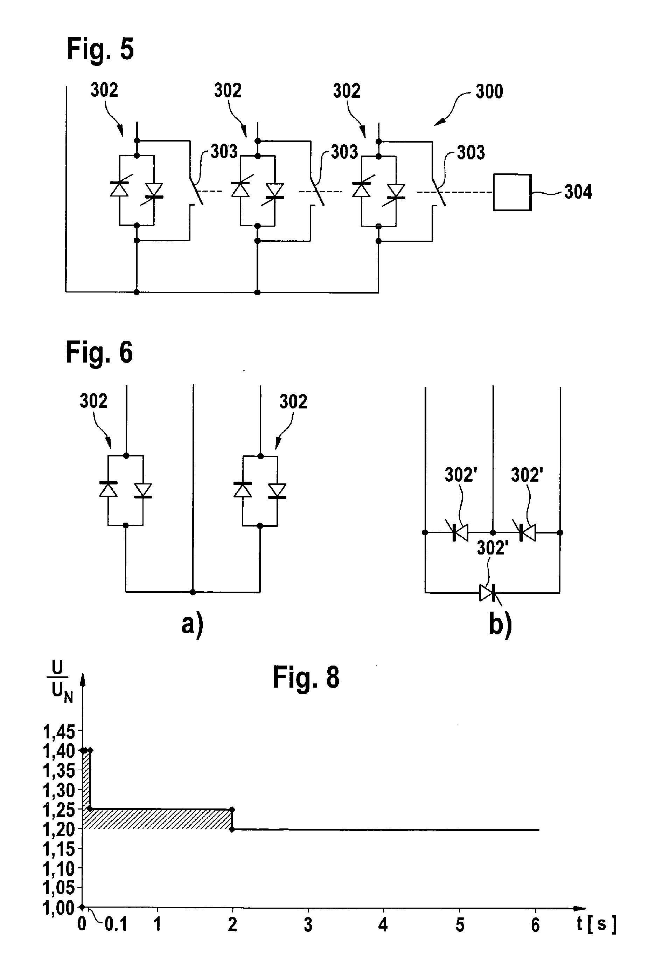

Zwischen dem Mittelspannungstransformator 22 und der Windenergieanlage 1 ist an der Anschlussleitung 2 ein Überspannungsschutzgerät, welches in seiner Gesamtheit mit der Bezugsziffer 3 bezeichnet ist, gemäß einem Ausführungsbeispiel der Erfindung angeschlossen. Das Überspannungsschutzgerät weist ein Leistungsverzweigungsmodul 30 auf, von welchem eine Stichleitung 32 abgeht und an deren Ende ein Drosselmodul 31 angeordnet ist. Mittels der durchgezogenen und gestrichelten Pfeile sind Leistungsflüsse im Normalbetrieb und bei einer Netzspannungsstörung dargestellt. Im Normalbetrieb fließt elektrische Leistung, und zwar insbesondere Wirkleistung und (bei übererregtem Betrieb induktive) auch elektrische Blindleistung, von der Windenergieanlage 1 durch die Anschlussleitung 2 und die dort angeordneten Transformatoren 22, 23 in das Netz 9 (durchgezogener Pfeil). Kommt es zu einer Überspannung im Netz, so kann sich zumindest in Bezug auf (induktive) Blindleistung der Leistungsfluss umkehren. Es fließt dann Leistung vom Netz 9 über die Transformatoren 23, 22 durch die Anschlussleitung 2 zur Windenergieanlage 1 (untererregter Betrieb). Erfindungsgemäß fließt aber nicht die gesamte Blindleistung zur Windenergieanlage 1, sondern über das Leistungsverzweigungsmodul 30 wird ein Teil in eine Stichleitung 32 und von dort zum Drosselmodul 31 abgeleitet. Dies bedeutet, dass nicht die gesamte durch die Anschlussleitung 2 fließende Leistung an die Windenergieanlage 1 gelangt, d. h. durch die Anschlussleitung 2 kann mehr Blindleistung fließen als die Windenergieanlage 1 aufzunehmen vermag. Dank dieses durch das erfindungsgemäße Leistungsverzweigungsmodul 30 mit Drosselmodul 31 erhöhten Blindleistungsflusses ergibt sich ein größerer Spannungsabfall über die Transformatoren 22, 23, so dass auch bei hoher Spannung im Netz 9 die Spannung an der Windenergieanlage 1 dank des Spannungsabfalls über die Transformatoren 22, 23 gering bleibt. Die Windenergieanlage sei bemessen für eine Spannungstoleranz bis zu 120% der Nennspannung. Zusätzlich gefordert sei in dem Ausführungsbeispiel eine Toleranz gegenüber Überspannungsspitzen, welche bis zu 140% betragen können. Die Höhe der Überspannungsspitzen und die Zeitdauer, während der sie von der Windenergieanlage 1 zu tolerieren ist, ist in Fig. 8 dargestellt. Die Überspannungsspitze bis zur maximalen Höhe von 140% ist lediglich über einen Zeitraum von 100 Millisekunden zu tolerieren, danach nur noch eine Überspannungsspitze bis zur Höhe von 125% der Nennspannung über einen Zeitraum von 2 Sekunden, woraufhin sich die Überspannung reduziert auf den durch die Auslegung der Windenergieanlage vorgegebenen oberen Spannungsgrenzwert von 120%. Die Begrenzungseinheit mit dem Drosselmodul gemäß der vorliegenden Erfindung braucht also nur kurzzeitig während des Zeitraums aktiviert zu werden, wenn die Spannung im Raum über 120% bis 140% der Netzspannung liegt, also insgesamt nur über einen Zeitraum von maximal 2 Sekunden. Diese Überspannungsspitze ist in Fig. 8 durch Schraffur kenntlich gemacht. Die aufzunehmende Energiemenge und damit die thermische Belastung des Drosselmoduls 31 ist durch diese Fläche bestimmt. Eine Beispielrechnung für die Dimensionierung des Drosselmoduls 31 ist nachfolgend wiedergegeben:

Bei einer Windenergieanlage mit einer Nennleistung von 2000 kW sei ein Mittelspannungstransformator 22 von 2500 kVA vorgesehen. Bei einer Nennspannung von 690 V und einer Netzfrequenz von 50 Hz ergibt sich ein Nennstrom zwischen Windenergieanlage 1 und Mittelspannungstransformator 22 von 2092 A. Für den Mittelspannungstransformator 22 sei daher eine Kurzschlussspannung von

$u_K$ = 6 % angenommen. Für den Parktransformator 23 sei eine Kurzschlussspannung von $u_K$ = 12 % angenommen. Bei im Netz 9 auftretender Spannung von 140 % der Nennspannung soll der Spannungsanstieg einer Windenergieanlage 1 auf 120 % der Netzspannung beschränkt werden, also bei einer Nennspannung von 690 V auf einen Wert von 828 V. Insgesamt ist eine Spannungsabsenkung von etwa 18 % angestrebt, wobei etwa 12 % über den Parktransformator 23 und etwa 6 % über den Mittelspannungstransformator 22 abfallen sollen. Um dies zu erreichen, muss das erfindungsgemäße Überspannungsschutzgerät so dimensioniert sein, dass sich bei einer Spannung von 828 V eine Blindleistung Q von

$$\sqrt{3} \times 828V \times 2092A = 3000kVA$$

einstellt. Dieser Leistungsfluss wird so verzweigt, dass von dem Leistungsverzweigungsmodul 30 in die Stichleitung 32 ein Anteil fließt, der durch das Verhältnis der Kurzschlussspannung des Mittelspannungstransformators 22 zu seinem Blindanteil an der Kurzschlussspannung bestimmt ist. Im dargestellten Ausführungsbeispiel sei die Kurzschlussspannung wie gesagt mit 4 % angesetzt, worauf 3,87 % auf den Blindanteil $u_X$ entfallen. Insgesamt besteht damit ein Scheinleistungsbedarf von ca. 3100 kVA, der von dem Drosselmodul 31 aufzubringen ist. Im Kurzzeitbetrieb kann wegen der im Normalbetrieb praktisch nicht vorhandenen thermischen Belastung eine erhebliche Überlastung erfolgen, und zwar bis zum Kehrwert der Kurzschlussspannung bei einem kurzgeschlossenen Drosseltransformator als Drosselmodul 31. Es ergibt sich damit durch Multiplikation der oben ausgerechneten Gesamtblindleistung mit dem Kurzschlussfaktor eine Dauerscheinleistung von 124 kVA, woraus schließlich ein Nennstrom bei erhöhter Nennspannung von 86 A resultiert.

Man erkennt an vorgenanntem Beispiel, dass ein verhältnismäßig klein dimensionierter Drosseltransformator als Drosselmodul 31 genügt, um zumindest im Kurzzeitbetrieb eine hohe Blindleistung über das Leistungsverzweigungsmodul 30 in die Stichleitung 32 abzuleiten, und so über die Induktivitäten in Gestalt der Transformatoren 22, 23 der Verbindungsleitung 2 einen erheblichen Spannungsabfall zu realisieren. Dieser Spannungsabfall kann dabei so groß gewählt werden, dass die Spannung an der Windenergieanlage 1 einen wesentlich engeren Toleranzbereich als im Netz 9 aufweist.

Verschiedene Ausführungsmöglichkeiten für das Leistungsverzweigungsmodul 30 mit seinem Schalter und einem Drosselmodul 31 sind in Fig. 2 dargestellt. Es handelt sich um einphasige Ersatzschaltbilder. Im einfachsten Fall ist lediglich ein Schalter 300 und eine geerdete Drosselspule 33 hintereinander in Serie geschaltet (siehe Fig. 2a). Es kann aber auch vorgesehen sein, dass mehrere Schalter 300, 300', 300" und mehrere Drosselspulen 33, 33', 33" parallel zueinander angeordnet sind. Vorzugsweise sind die Induktivitäten der Kurzschlussdrosseln 33, 33', 33" verschieden voneinander gewählt, bspw. in einer Teilung 4:2:1; es soll aber nicht ausgeschlossen sein, dass die Induktivitäten jeweils gleich hoch sind. Dann kann durch wechselweises Betätigen der Schalter 300, 300', 300" eine gestufte Zuschaltung der Kurzschlussdrosseln 33, 33', 33" an die Übertragungsleitung 2 vorgesehen sein. Insgesamt sind mit den verschiedenen Schalterstellungen sieben Kombinationen möglich. Dabei kann je nach Bedarf und Höhe der Spannungsspitze durch Betätigen der Schalter 300, 300', 300" ein geeignetes Blindstrommaß festgelegt werden, welches über die Stichleitung 2 abzuzweigen ist, um die Spannung an der Windenergieanlage 1 innerhalb vorgegebener Grenzen zu halten. Es sei angemerkt, dass auch Anordnungen mit gleichen Kurzschlussdrosseln vorgesehen sein können. Eine alternative Ausführungsform ist in Fig. 2c dargestellt. In diesem Fall ist der Schalter des Leistungsverzweigungsmoduls nicht zwischen Kurzschlussdrossel 31 und der Übertragungsleitung 2 angeordnet, sondern in Stromrichtung dahinter. Die Kurzschlussdrossel 33 ist hier mit ihrem einen Ende direkt an die Anschlussleitung 2 angeschlossen und mit ihrem anderen Ende an einen Wechselrichter 30'. Dieser ist für den Kurzschlussbetrieb geschaltet und ermöglicht es, in an sich bekannter Weise je nach Ansteuerung unterschiedliche Wirk- und Blindleistungen einzustellen. Im Normalbetrieb wird der Wechselrichter 30' nicht betätigt, so dass die Kurzschlossdrossel 33 nicht bestromt wird, d. h. der gesamte Leistungsfluss geht unverzweigt durch die Anschlussleitung 2. Bei Überspannung wird der Wechselrichter 30' betätigt, so dass die Kurzschlussdrossel 33 bestromt und damit Blindleistung abgezweigt wird.

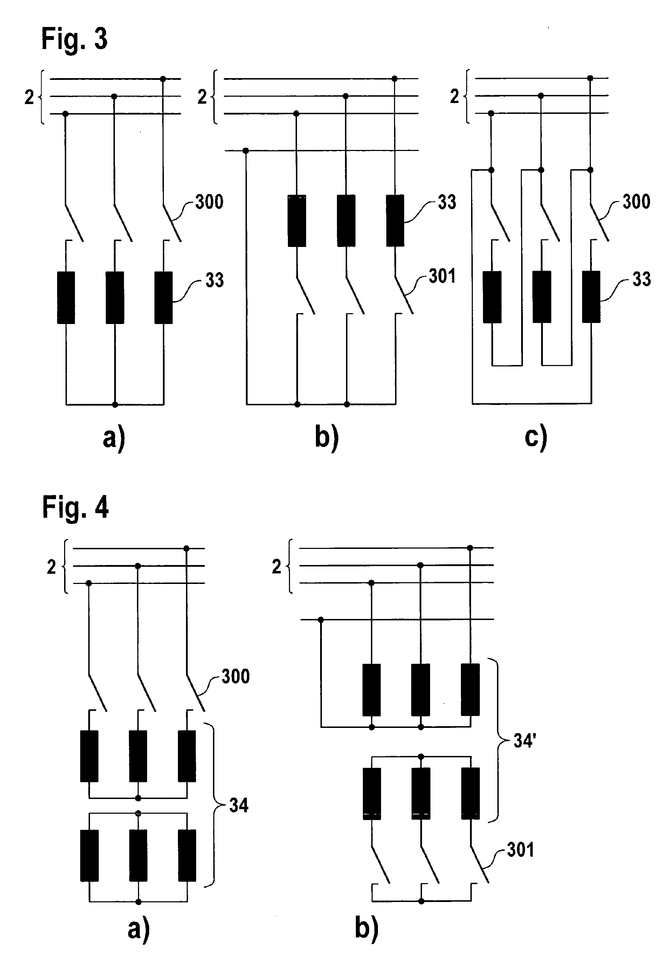

In Fig. 3 sind dreiphasige Schaltbilder für verschiedene Topologien von Leistungsverzweigungsmodulen 30 und Kurzschlussdrosseln 33 dargestellt. In Fig. 3a ist eine Sternschaltung ohne Neutralleiteranschluss realisiert, wobei die Schalter 301 des Leistungsverzweigungsmoduls 10 als Zwischenschalter angeordnet sind. Unter Zwischenschalter wird hierbei verstanden, dass sie zwischen der Verbindungsleitung 2 und der Kurzschlussdrossel 33 angeordnet sind. - Eine alternative Typologie ist in Fig. 3b dargestellt. Es handelt sich hierbei um eine Sternschaltung mit einem Neutralleiteranschluss. Die Schalter 300 sind als Kurzschließer ausgebildet. Darunter wird verstanden, dass sie das netzferne Ende der Kurzschlussdrosseln 33 der einzelnen Phasen miteinander im Bedarfsfall kurzschließen. Sind die Schalter geöffnet, so hängen zwar die Kurzschlussdrosseln 33 an der Verbindungsleitung 2, belasten diese jedoch durch ihre Induktivität nicht oder kaum, da sie am anderen Ende ein floatendes Potential aufweisen und nicht geerdet sind. - Eine weitere alternative Typologie ist in Fig. 3c dargestellt. Es handelt sich um eine Variante der Typologie in Fig. 3a, und zwar um eine Dreiecksschaltung ohne Neutralleiteranschluss. Die Schalter 300 sind als Zwischenschalter ausgeführt. Diese Topologie weist zwar den Nachteil eines erhöhten Verkabelungsaufwands auf, bietet aber den Vorteil niedrigerer Strangströme in den Schaltern was sich günstig auf die elektrischen Anforderungen an die Schalter 300 auswirkt.

In Fig. 4 sind Ausführungsbeispiele für das Drosselmodul 31 dargestellt, welche einen Transformator 34 mit Kurzschluss auf der Sekundärseite verwenden. Derartige Transformatoren 34 werden auch als "Drosseltransformatoren" bezeichnet. Benutzt wird hierbei die Streuinduktivität des Transformators 34 basierend auf den in Luft liegenden magnetischen Streufeldern der Wicklung. Diese bieten gegenüber den magnetischen Streufeldern im Blech bzw. Magnetkern den Vorteil, dass sie praktisch keiner Sättigung ausgesetzt sind. Derartige Drosseltransformatoren 34 erfordern daher im Kurzschlussbetrieb keine erhöhte Auslegung des Magnetkreises, wie sie bei auf Magnetkernen basierenden Drosseln erforderlich ist. Dies ermöglicht es, die Drosseltransformatoren 34 zumindest im Kurzzeitbetrieb thermisch und magnetisch sehr hoch zu überlasten. So ist es möglich, einen Drosseltransformator 34 mit einer typischen Kurzschlussspannung von $u_K = 4\%$ bei Nennspannung mit bis zur fünfundzwanzigfachen Leistung zu überlasten. Die in Fig. 4a dargestellte Ausführungsform weist den Schalter 300 in einer Zwischenschalteranordnung zwischen der Übertragungsleitung 2 und dem Drosseltransformator 34 auf. Diese Anordnung bietet den Vorteil, dass im Normalbetrieb der Drosseltransformator 34 vollkommen getrennt ist und damit keine Verluste verursacht. Für die Bemessung des Drosseltransformators 34 bildet dies weiter den Vorteil, dass kein dauernder Betrieb an Nennspannung berücksichtigt zu werden braucht, da keine entsprechenden Leerlaufverluste auftreten. In Fig. 4b ist eine alternative Ausführungsform dargestellt, bei welcher der Schalter als Kurzschließer 301 im Sekundärkreis des Transformators 34' angeordnet ist. Der Nachteil dieser Anordnung ist, wie bereits beschrieben, dass in diesem Fall im Normalbetrieb Spannung am Transformator 34 anliegt und damit (geringe) Leerlaufverluste auftreten. Der Vorteil dieser Anordnung ist jedoch, dass die Sekundärspannung jeweils optimal passend für die zu verwendenden Kurzschließer 300' gewählt werden kann. Weiter besteht die Möglichkeit, die als Kurzschließer 301 zu verwendenden Schalter für verschiedene Anwendungen, bspw. für 690 V bei 500 Hz-Systemen oder 575 V bei 60 Hz-Systemen, zu standardisieren, und erforderliche Anpassungen über den Drosseltransformator 34' durchzuführen.

In Fig. 5 sind verschiedene Ausführungsbeispiele für Schalter 300 des Leistungsverzweigungsmoduls 30 dargestellt. Es handelt sich hierbei um Thyristorschalter 302, die aus zwei antiparallel geschalteten Thyristoren bestehen. Dabei ist jeweils ein Paar von antiparallel geschalteten Thyristoren für jede Phase vorgesehen. Die Steuereingänge der Thyristorschalter 302 sind miteinander verbunden und werden von einem gesonderten Steuergerät (nicht dargestellt) angesteuert. Ferner in Fig. 5 dargestellt ist ein Parallelschütz 303, welches parallel zu jedem Paar von Thyristorschaltern 302 geschaltet ist. Die Parallelschütze 303 sind funktionell betätigt von einem gemeinsamen Stellglied 304. Dieses wird über eine (nicht dargestellte) Signalleitung von dem (nicht dargestellten) Steuergerät betätigt, wenn längere Schaltzeiten auftreten, insbesondere Schaltzeiten von 100 ms oder mehr.

In Fig. 6 sind alternative Ausführungsformen für die Thyristorschalter 302 dargestellt. In Fig. 6a ist eine Sparschaltung dargestellt, bei welcher sich ein Paar von antiparallel geschalteten Thyristorschaltern 302 nur in zwei der drei Phasen eines Drehstromsystems befindet. In der dritten Phase ist kein Schalter vorgesehen. Die Zahl der benötigten Schalter reduziert sich damit um ein Drittel. Eine weitere Vereinfachung ist in Fig. 6b dargestellt. Es handelt sich hier um eine "Super-Sparschaltung", bei der die Thyristorschalter 302 nur einfach eingesetzt sind, und zwar jeweils in Dreiecksschaltung zwischen den Phasen mit einer gemeinsamen Orientierungsrichtung (in Fig. 6b ist linksdrehend dargestellt, genauso gut könnten sie auch rechtsdrehend angeordnet sein). Mit dieser Super-Sparschaltung ergibt sich eine weitere Verminderung der Zahl der benötigten schaltenden Komponenten.

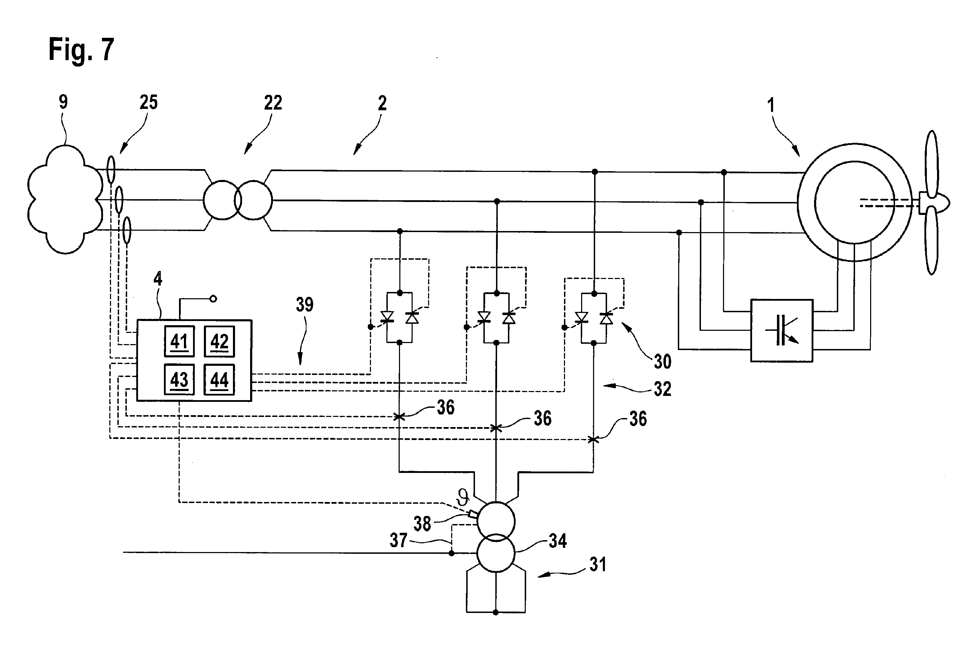

In Fig. 7 ist ein Schaltungsbeispiel des erfindungsgemäßen Überspannungsschutzgeräts dargestellt, welches an eine Übertragungsleitung 2 zwischen einer Windenergieanlage 1 und einem Mittelspannungstrafo 22 an ein Netz 9 angeschlossen ist. Das Überspannungsschutzgerät umfasst ein Leistungsverzweigungsmodul 30 und einen Drosseltransformator 34 als Drosselmodul 31. Das Leistungsverzweigungsmodul 30 weist eine Schaltereinheit auf, bei der für jede Phase zwei antiparallel geschaltete Thyristorschalter vorgesehen sind. Weiter können parallel zu den Thyristorschaltern Parallelschütze (nicht dargestellt) vorgesehen sein, welche bei längeren Zeiträumen (wesentlich größer als 100 ms) den Strom übernehmen. Die Schalteinheit ist mit ihrer einen Seite an die Übertragungsleitung 2 angeschlossen und mit ihrer anderen Seite an die Primärseite des Drosseltransformators 37. Dieser ist in der Schaltgruppe Yyn0 ausgeführt, wobei der Nullleiteranschluss an der Primärwicklung optional vorgesehen sein kann (gestrichelt dargestellt). In den Leitungen 35 zwischen der Schalteinheit und der Primärseite des Drosseltransformators 34 sind für die einzelnen Phasen Strommesssensoren 36 angeordnet. An der Sekundärwicklung des Drosseltransformators 34 sind die Phasenleitungen miteinander kurzgeschlossen. Weiter ist ein Nullleiteranschluss 37 vorgesehen.

Es sind Spannungssensoren 25 an der Anschlussleitung 2 sowohl für die an der Windenergieanlage anliegende Niederspannung wie auch für das Mittelspannungsniveau vorgesehen. Sie sind als Eingangssignale an ein Steuergerät 4 angelegt, an welches auch die Messsignale der Stromsensoren 36 angeschlossen sind. Das Steuergerät 4 bestimmt anhand der Messwerte, wenn eine Überspannungssituation auftritt, und gibt an seinem Ausgang ein Schaltsignal aus. Dieses ist über eine Signalleitung 39 an Steuereingänge der Thyristorschalter des Leistungsverzweigungsmoduls angelegt. In Abhängigkeit von dem Steuersignal schalten die Thyristoren durch. Vorgesehen ist dies für Zeiträume bis etwa 100 ms. Dieser kurze Zeitraum ermöglicht es, den Drosseltransformator 34 deutlich zu überlasten. Für den dargestellten Drosseltransformator 34 der Schaltgruppe Yyn0 mit einer Nennleistung von 125 kVA kann folgende Dimensionierung zugrundegelegt werden. Aufzunehmen ist zum Absenken der an der Windenergieanlage 1 wirkenden Überspannung von 140 % auf Mittelspannungsniveau auf 120 % am Niederspannungsniveau eine kurzzeitige Blindleistung von etwa 3000 kVA. Ein solch großer Transformator wäre für ein Überspannungsgerät viel zu teuer. Dank der Erfindung kann ein verhältnismäßig kleiner Drosseltransformator 34 vorgesehen werden, der lediglich auf etwa 125 kVA Nennleistung spezifiziert zu sein braucht.

Die Erfindung beruht auf der Erkenntnis, dass wegen des Kurzzeitbetriebs der Drosseltransformator 34 stark überlastet werden kann, und zwar etwa mit dem Kehrwert der Kurzschlussspannung. Beträgt die Kurzschlussspannung etwa 4 %, so ist der Kehrwert daraus 25. Dies bedeutet, dass zum Aufnehmen der erforderten Blindleistung von 3000 kVA der Drosseltransformator 34 erfindungsgemäß auf nur 125 kVA dimensioniert zu sein braucht. Dabei kann ein ausgesprochen kleiner und kostengünstiger Drosseltransformator 34 verwendet werden. Das erfindungsgemäße Überspannungsschutzgerät wird damit kompakt und klein und kostengünstig. Es eignet sich damit insbesondere zur Neuausrüstung wie auch zur Nachrüstung bestehender Windenergieanlagen.

Das Steuergerät weist optional eine Mehrstufenlogik 41 auf. Diese dient dazu, bei mehrstufig ausgeführten Schaltern (siehe Fig. 2b) die Betätigung abhängig von dem Grad der Überspannung durchführt. Weiter ist ein Repetitionsmodul 42 vorgesehen, welches dazu ausgebildet ist, nur eine bestimmte Anzahl von Betätigungen in schneller Folge hintereinander zu erlauben. Damit wird vermieden, dass durch mehrere in kurzer zeitlicher Reihenfolge auftretende Überspannungsfälle eine thermische Überlastung des Drosselmoduls 31 auftreten könnte. Weiter ist optional ein Überlastmodul 43, welches einer übergeordneten Regelinstanz, insbesondere einem Parkmaster (nicht dargestellt) ein Signal übermittelt, wenn das erfindungsgemäße Überspannungsschutzgerät hinsichtlich seiner Kapazität erschöpft ist. Damit besteht die Gefahr, dass die Windenergieanlage 1 nicht mehr ausreichend vor Überspannung geschützt wird. Dies wird dem Parkmaster damit signalisiert und die betroffene Windenergieanlage 1 kann eine Sicherheitsabschaltung vornehmen.

Weiter ist an das Überlastmodul 43 ein Temperatursensor 38 angeschlossen. Dieser überwacht die Temperatur des Drosseltransformators ggf. weiterer Komponenten wie der Schalter des Leistungsverzweigungsmoduls 30. Wird das Erreichen einer kritischen Temperatur festgestellt, so gibt das Überlastmodul 43 ein entsprechendes Signal aus und verhindert ein weiteres Betätigen des Leistungsverzweigungsmoduls 30. Weiter enthält das Steuergerät 4 ein Kennlinienmodul 44, welches eine Spannungs-/Zeit-charakteristik enthält. In diesem sind die maximalen Einschaltzeiten in Abhängigkeit von der Spannung abgelegt (siehe Fig. 8). Mit diesem Kennlinienmodul bestimmt das Steuergerät 4, ob die Überspannungsspitze noch in dem vorgesehenen Bereich liegt, und führt im Falle eines Verlassens erforderlichenfalls die Sicherheitsabschaltung durch.

**Patentansprüche**

1. Überspannungsschutzgerät für Windenergieanlagen (1), das zum Anschluss an eine Anschlussleitung (2) mit mindestens einer Induktivität (22) zwischen Windenergieanlage (1) und Netz (9) ausgebildet ist, einem Steuergerät (4), welches in Abhängigkeit von einer Überspannung an der Windenergieanlage (1) eine Begrenzungseinheit betätigt, **dadurch gekennzeichnet, dass** die Begrenzungseinheit eine Stichleitung (32) mit einem mit einer Schalteinheit versehenen Leistungsverzweigungsmodul (30) und einem Drosselmodul (31) umfasst.

2. Überspannungsschutzgerät nach Anspruch 1, **dadurch gekennzeichnet, dass** die Schalteinheit als ein Zwischenschalter (300) ausgebildet ist.

3. Überspannungsschutzgerät nach Anspruch 1, **dadurch gekennzeichnet, dass** die Schalteinheit als ein Kurzschlussschalter (301) ausgebildet ist.

4. Überspannungsschutzgerät nach einem der vorhergehenden Ansprüche, **dadurch gekennzeichnet, dass** die Schalteinheit mit Halbleiterschaltern, insbesondere aber GTO, IGBT, (302) ausgeführt ist.

5. Überspannungsschutzgerät nach Anspruch 4, **dadurch gekennzeichnet, dass** zusätzlich zu den Thyristorschaltern (302) ein elektrisch schaltbares Parallelschütz (303) oder ein motorbetätigter Leistungsschalter vorgesehen ist.

6. Überspannungsschutzgerät nach einem der vorhergehenden Ansprüche, **dadurch gekennzeichnet, dass** die Schalteinheit eine Sparschaltung aufweist, wobei mindestens ein Schalter (300, 301) weniger als die Anzahl der Phasen vorgesehen ist.

7. Überspannungsschutzgerät nach einem der vorhergehenden Ansprüche, **dadurch gekennzeichnet, dass** die Schalter (300, 301) nur unidirektional zwischen den Phasen angeordnet sind.

8. Überspannungsschutzgerät nach einem der vorhergehenden Ansprüche, **dadurch gekennzeichnet, dass** als Drosselmodul (31) ein Drosseltransformator (34) verwendet ist.

9. Überspannungsschutzgerät nach Anspruch 8, **dadurch gekennzeichnet, dass** der Drosseltransformator (34) eine Kurzschlussspannung von 3 bis 7 %, vorzugsweise 4 bis 6 % aufweist.

10. Überspannungsschutzgerät nach Anspruch 8 oder 9, **dadurch gekennzeichnet, dass** der Drosseltransformator (34) so unterdimensioniert ist, dass er die Nennspannung nicht dauerhaft aufnehmen kann.

11. Überspannungsschutzgerät nach Anspruch 9 oder 10, **dadurch gekennzeichnet, dass** der Drosseltransformator (34, 34') so dimensioniert ist, dass seine Nennleistung in etwa einer kurzzeitig aufzunehmenden Blindleistung multipliziert mit dem Kehrwert der Kurzschlussspannung entspricht.

12. Überspannungsschutzgerät nach einem der vorhergehenden Ansprüche,
**dadurch gekennzeichnet, dass**
das Drosselmodul (31) mehrstufig ausgeführt ist.

13. Überspannungsschutzgerät nach Anspruch 12,
**dadurch gekennzeichnet, dass**
das Drosselmodul (31) als Drossel (33) oder Transformator (34) mit einer Mehrzahl von Anzapfungen ausgebildet ist.

14. Überspannungsschutzgerät nach einem der vorhergehenden Ansprüche,
**dadurch gekennzeichnet, dass**
ein Repetitionsmodul (42) vorgesehen ist, welches eine bestimmte Anzahl von Betätigungen in schneller Folge hintereinander erlaubt.

15. Überspannungsschutzgerät nach einem der vorhergehenden Ansprüche,
**dadurch gekennzeichnet, dass**
ein Überlastmodul (43) vorgesehen ist, welches einer übergeordneten Regelinstanz, insbesondere einem Parkmaster eines Windparks, signalisiert, wenn das Überspannungsschutzgerät mit seinem thermischen und/oder elektrischen Vermögen ausgeschöpft ist.

16. Überspannungsschutzgerät nach einem der vorhergehenden Ansprüche,
**dadurch gekennzeichnet, dass**
ein Kennlinienmodul (44) vorgesehen ist, in welchem eine Spannungs-/Zeitcharakteristik implementiert ist und dazu ausgebildet ist, bei Verlassen eines vorgesehenen Betriebsbereichs zu sperren.

**Fig. 1**

**Fig. 2**

a)  b)  c)

**Fig. 3**

a)

b)

c)

**Fig. 4**

a)

b)

# Fig. 5

# Fig. 6

a)                    b)

# Fig. 8

Fig. 7

EP 2 169 222 A2

**EP 2 169 222 A2**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 7095597 B1
- WO 2004070936 A1